# EUROPEAN PATENT SPECIFICATION

(11) **EP 0 488 689 B1**
(45) Date of publication and mention of the grant of the patent: **04.06.1997**
(21) Application number: 91310959.1
(22) Date of filing: 27.11.1991
(51) Int. Cl.: G11B 20/00, G11B 20/10, G11B 27/30

(54) **Multi-channel data recorder**
Mehrkanaliger Datenaufnehmer
Enregistreur de données à canaux multiples

(30) Priority: 27.11.1990 JP 327195/90
(43) Date of publication of application: 03.06.1992
(73) Proprietor: SONY CORPORATION, Tokyo (JP)
(72) Inventor: Fukami, Tadashi, Tokyo (JP)
(74) Representative: Senior, Alan Murray

(56) References cited:
- EP-A- 0 430 465
- US-A- 4 947 271
- PATENT ABSTRACTS OF JAPAN vol. 13, no. 396 (E-815)4 September 1989 &JP-A-01140814 (MISUBISHI ELERIC CORP) 2 June 1989

## Description

The present invention relates to a multi-channel data recorder, and more particularly is applicable to a data recorder for recording data from a plurality of channels sequentially.

A digital audio tape recorder (DAT) is a magnetic recording apparatus which makes slanted recording tracks sequentially arranged on a magnetic tape by using rotary heads and records digital audio signals on the recording tracks sequentially.

In such a digital audio tape recorder, the audio signals are converted into digital signal for recording and/or reproducing and it is possible to effectively avoid tone degradation by means of execution of error correcting procedures.

Recently, by using integrated circuits, the overall size can be made compact and light-weight.

It would be convenient if various data could be recorded by utilising this kind of digital audio tape recorder.

Further, in such a case, it would be possible to record or reproduce the data easily using a construction of digital audio tape recorder and to form a compact and light weight tape recorder if a signal recording format for this digital audio tape recorder could be utilised effectively.

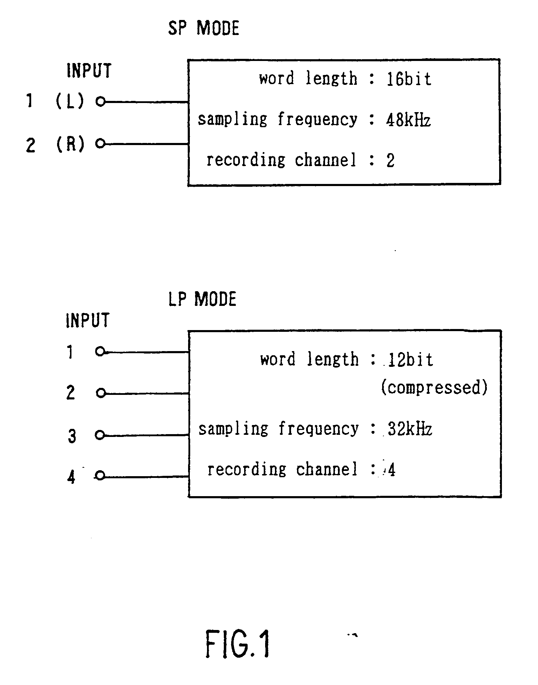

Figure 1 illustrates a signal recording mode of a digital audio tape recorder (DAT) to record signals on a tape by using rotary heads. Such a recorder is described in EP-A-0 430 465 which forms part of the state of the art by virtue of Art 54(3) EPC. There are two signal recording modes SP (standard play) mode and LP (long play) mode. In the SP mode, an input signal can be recorded as data having 16 bits in one word, 48 [kHz] in sampling frequency and two channels (i.e. L and R channels). In the LP mode, the input signal can be recorded with the number of recording channels increased by two channels over the SP mode.

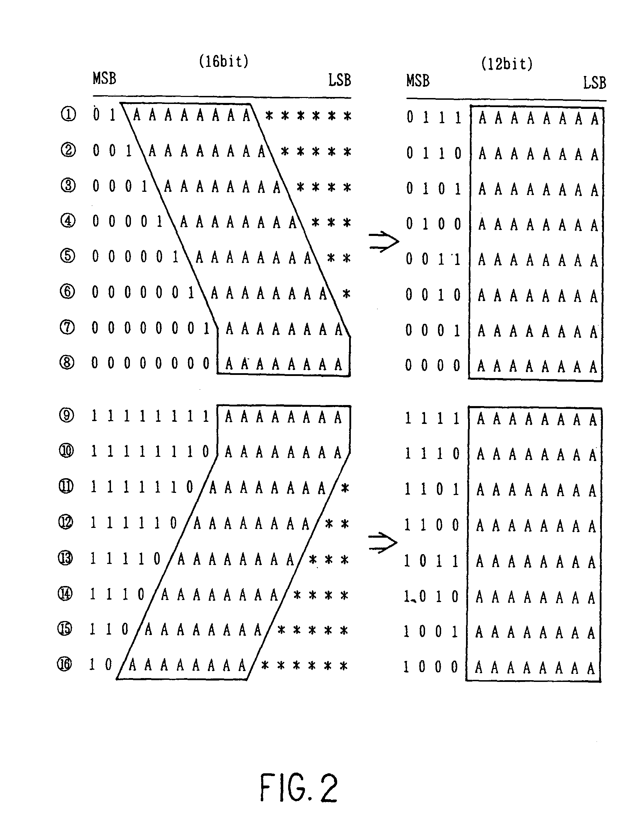

Figure 2 illustrates the standard for data conversion/compression in the LP mode. A signal with 16 bits in one word is compressed into a signal with 12 bits in one word and is recorded on the tape. The 8 bit sections of the 16 bit signal are extracted which correspond to the fine amplitude levels. Range bits of 4 bits representing the coarse amplitude levels (or ranges) are generated and added to the 8 bits of the signal to be recorded on the tape as a signal with 12 bits in one word. The low-order bits following the 8 bits extracted from the signal with 16 bits in one word are omitted when converting/compressing into 12 bits in one word.

An object of this invention is to provide a multi-channel data recorder capable of effectively utilising an existing digital audio tape recorder (DAT) for recording multi-channel data from a greater number of channels.

According to the present invention, there is provided a multi-channel data processing apparatus for use with a digital audio tape recorder of the type in which the word length of inputted audio signals is reduced using a predetermined compression standard, characterised in that the apparatus comprises processing means for adding channel identification data to channel data from a plurality of data channels, the word length of said channel data being not larger than said reduced word length, output means for supplying the resultant data to said recorder in place of said audio signals, and in that the processing means adds the channel identification data to the channel data to produce data in the input form of the compression standard and such that after compression according to the compression standard the compressed data which is to be recorded comprises the channel data and a channel identifier.

For example, the invention can be used with a multi-channel data recorder in which an n-bit signal is compressed into a signal with m bits (n > m) in one word by non-linear quantisation processing, for example a bit-reallocation processing. By the non-linear quantisation processing, an identification data with ℓ bits which represents the degree of the non-linear quantisation processing, for example as range bits as representative of the range (coarse amplitude) of the signal level is generated. This identification data is added to m bits of fine amplitude data to generate a signal with m + ℓ (≤ n) bits in one word which is recorded on the tape of a magnetic recording apparatus.

With the invention, the magnetic recording apparatus is provided with means for generating a signal with n bits which consists of channel data with m bits in one word, a channel identification data with ℓ bits for defining which channel the data is from and redundancy bits with n-(m + ℓ) bits. By constructing thus data arrangement, 2^{ℓ} channels of channel data with m bits in one word are recorded on the magnetic tape at the same time by means of the magnetic tape recorder. Thereby, it is possible to record multi-channel data without dropout of information of each channel data.

Thus with the present invention the apparatus first processes the data from many channels into such a form that when it is provided as an input to an unmodified DAT recorder, the compression of the data by the recorder results in compressed data which includes the data word from the channel and an identifier for that channel. Thus many channels can be recorded on a DAT recorder intended for a few channels.

Where the DAT uses non-linear quantization as the compression standard this allows the provision of an apparatus which takes the input data from each channel and outputs it to the DAT recorder in such a way that the data for respective channels are recorded in respective ranges as defined by the range bits, i.e. are treated by the DAT recorder as though they were different signal levels.

In one aspect this can be achieved by adding as a header to each word from each channel bits (which may vary in number and/or value between the channels) unique to that channel together with any redundancy bits necessary to make up the word length to that expected by the DAT (e.g. 16 bits). These bits are chosen so that when the DAT compresses that data for recording, the result of the compression carries both identification of which channel the data is from and also the data itself.

Thus to provide such a signal suitable for input to a DAT recorder in which a signal is compressed from n bits (e.g. 16) into m + ℓ (e.g. 12) by a non-linear quantization processing, for example a bit-reallocation processing, where the ℓ bits are the range data (e.g. 4 bits) and m bits the level within the range (e.g. 8 bits), the invention provides a converter which takes data in m-bit words from up to 2^{ℓ} channels and adds to each m-bit word identification bits representing the channel but which will be processed by the DAT as the range or the degree of the non-linear quantization processing, and converted into ℓ range bits.

The number of identification bits is chosen so that the m bit data word forms the m low bits of the data word to be recorded and the identification bits forms the high bits. The converter also adds n - (m + ℓ) redundancy bits if necessary. By constructing this data arrangement, 2 channels of channel data with m bits in one word are recorded on the magnetic tape at the same time by means of the standard DAT magnetic tape recorder. Thereby, it is possible to record multi-channel data without dropout of information of each channel data.

The nature, principle and utility of the invention will become more apparent from the following detailed description by way of example with reference to the accompanying drawings in which like parts are designated by like reference numerals or characters, and in which:-

In the accompanying drawings:
Fig. 1 is a block diagram for explaining a signal recording mode of a certain digital audio tape recorder (DAT);
Fig. 2 is a table showing a data conversion/compression standard in the LP mode of the digital audio tape recorder as shown in Fig. 1;
Fig. 3 is a block diagram showing a multi-channel data recorder according to the present invention;
Fig. 4 is a data conversion/compression table according to the present invention;
Fig. 5 is a time chart showing a procedure of a transforming multi-channel data; and
Fig. 6 is a block diagram showing the construction of the digital signal processor (DSP) as shown in Fig. 3.

Preferred embodiments of this invention will be described with reference to the accompanying drawings:

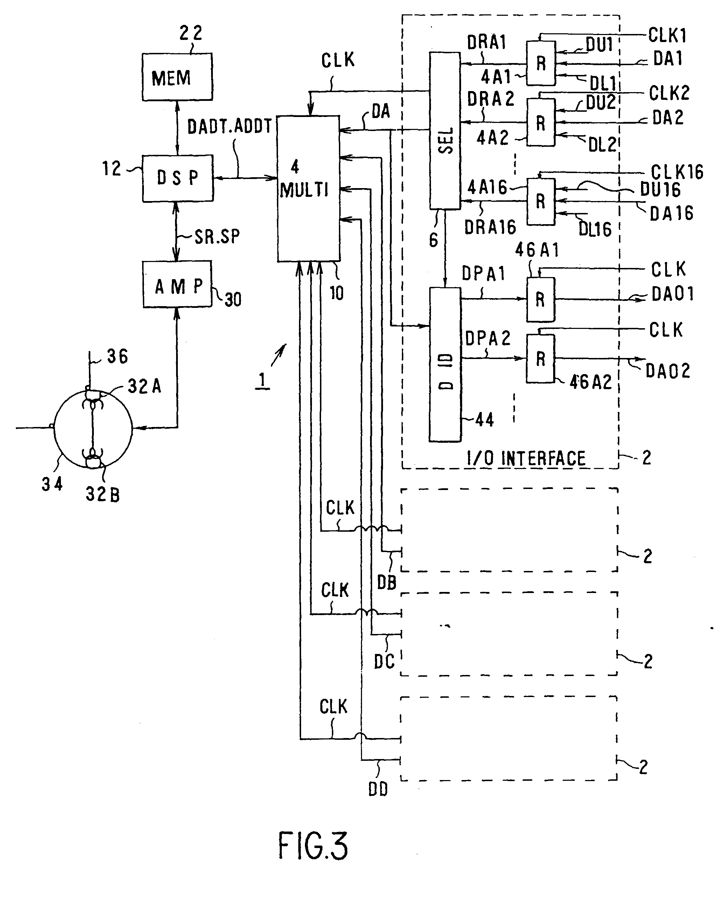

Referring to Fig. 3, 1 depicts a data recorder, generally, in which input data (DA1 - DA16) of 16 channels (ℓ = 4), each of 8 bits (m = 8), are inputted from an object to be measured through an input/output circuit 2.

The input data DA1 - DA16 are supplied to latch circuits (R) 4A1 - 4A16, respectively, to which the input data (DA1 - DA16) are latched with clock (CLK1 - CLK16) of the respective input data DA1 - DA16.

Further, at this time, in addition to the input data DA1 - DA16 with transmission rate of 16 [kbps], additive data DU1 - DU16 and DL1 - DL16 are supplied to the latch circuits (R) 4A1 - 4A16 from a system control circuit (not shown) so as to be added to the head and the tail of the corresponding input data DA1 - DA16, respectively, resulting in recording data DRA1 - DRA16.

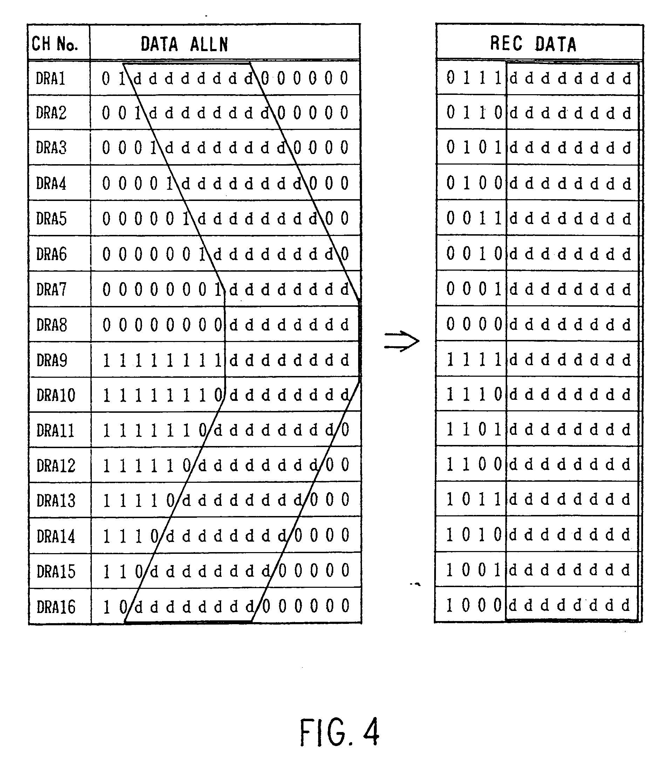

Fig. 4 illustrates a bit allocation to data (8 bits) from respective data channel.

As shown in Fig. 4, for the input data DA1 (shown by symbol d) of the first channel, an additive data DU1 which is "01" is added to the head thereof and an additive data DU1 which is six "0" bits is added to its tail, resulting in the data DRA1 of 16 bits.

For the input data DA2 of the second channel, an additive data DU2 of "001" is added to the head thereof and an additive data DL 2 of 5 "0" bits is added to its tail, resulting in the data DRA2.

In the similar manner, an additive data DU3 of "0001" is added to the head of the input data DA3 of the third channel and an additive data DL3 of 4 "0" bits is added to its tail, resulting in the data DRA3 and an additive data DU4 of "00001" is added to the head of the input data DA4 of the fourth channel and an additive data DL4 of 3 "0" bits is added to its tail, resulting in the data DRA4.

For the input data DA5 and DA6 of the fifth and sixth channels, additive data DU5 and DU6 of "000001" and "0000001", respectively, and additive data DL5 and DL6 of two "0" bits and one "0" bit, respectively, are added to the heads and tails of the input data DA5 and DA6, respectively, resulting in the data DRA5 and DRA6.

Against this, for the input data DA7 - DA9 of the seventh - ninth channels, additive data DU7 of "00000001", additive data DU8 of 8 "0" bits and DU9 of 8 "1" bits are added to heads thereof, respectively, resulting in the data DRA7 - DRA9.

Further, for the input data DA10 of the tenth channel, an additive data DU10 of "11111110" is added to the head thereof to produce the recording data DRA10, while for the input data DA11 - DA16 of the eleventh - 16th channels, additive data DU11 - DU16 of "1111110" - "10" are added to heads of the input data and additives DL11 - DL16 of one "1" bit - 6 "1" bits are added to tails thereof, resulting in data DRA11 - DRA16, respectively.

It will be appreciated by comparing Figures 4 and 2 that when the data DR1 - DR16 are processed by the DAT the resultant 12 bit data which is recorded on the tape contains the 8 data bits d and a 4 bit identifier indicating the channel from which the data came. Thus all 16 channels are recorded in distinguishable fashion by a standard, i.e. 4 channel, DAT recorder.

A selector circuit 6 serves to supply to a 4 channels multiplexer 10 the data (DRA1 - DRA16) latched in the respective latch circuits 4A1 - 4A16 sequentially with a predetermined interval.

In this embodiment, three other input/output circuits are provided each being identical to the input/output circuit 2 and each output data DA - DD of the input/output circuits being supplied to the four channel multiplexer circuit 10.

Thus, the input data with 8 bits in one word carried by 16 channels x 4 systems is converted into data with 16 bits in one word and is supplied to the 4 channel multiplexer 10 sequentially.

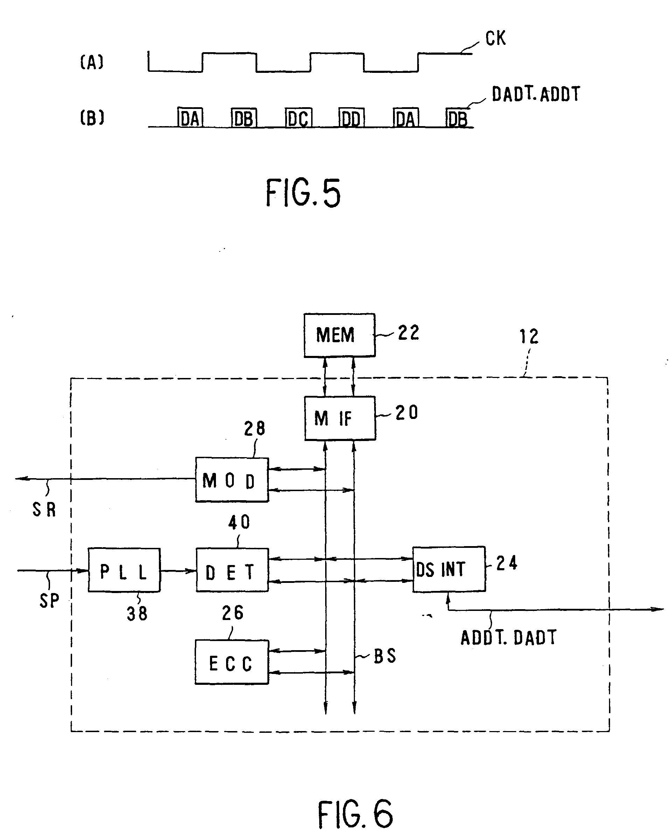

As shown in Fig. 5, in the 4 channel multiplexer circuit 10, the output data DA - DD supplied from each input/output circuit 2 is temporarily stored in the buffer circuit (not shown) and is then outputted sequentially in synchronism with the clock signal CK (Fig. 5A) from the digital signal processing circuit (DSP)12.

By this, the digital signal processing circuit 12 receives transmission data ADDT (Fig 5B) composed of a series of the output data DA - DD each with 16 bits in one word of 64 [kHz] period.

The digital signal processing circuit 12 is a signal processing circuit of an integrated circuit digital audio tape recorder (DAT) and, in this embodiment, processes the reception data DDT in a mode with 32 [kHz] in sampling frequency, 4 channels (i.e. the LP mode) standardized for a digital audio tape recorder using rotary heads (R - DAT).

That is, as shown in Fig. 6, the digital signal processing circuit 12 receives, on a bus BS, a control data DC supplied from a system control circuit (not shown) through a data input/output circuit (data I/O) 18 and stores them in a memory circuit 22 through a memory interface circuit (memory IF) 20.

By this, the digital signal processing circuit 12 accesses the control data DC stored in the memory circuit 22 at a predetermined timing and, with a switching of operation mode of the respective circuit blocks according to the control data DC, is switched to a predetermined operation mode determined as a whole by the control data DC.

In Fig. 6, the construction of the digital signal processing circuit 12 is illustrated.

A digital signal interface 24, in the recording mode, receives the transmission data ADDT, divides with a predetermined interleave period, and stores data temporarily to the memory circuit 22.

The data stored at a predetermined memory area of the memory circuit 22 is interleave processed according to the rule of the mode with 12 bits in word length of 32 [kHz] of sampling frequency by means of the digital input/output circuit 24.

That is, as shown in Fig. 4, for the transmission data ADDT, when the most significant two bits are "01", the subsequent 8 bits are extracted and then assigned as lower significant bits and the identification data or range data corresponding to the signal level "0111" is assigned to the head of this 8 bits data (referred to as compression data, hereinafter) (Fig. 4).

By this, the digital signal processing circuit 24 compresses the 16 bits data DA - DD with 16 bits in one word to data with 12 bits in one word according to aforementioned standard of the LP mode and stores them in the memory circuit 22.

In the similar manner, when the most significant bits are "001" and "0001", subsequent 8 bits are assigned to lower significant bits, identification data "0110" and "0101" are assigned thereto, and then the resultant is converted into compression data.

In the similar manner, when the most significant bits are "00001" and "000001", subsequent 8 bits are assigned to lower significant bits and identification data "0100" and "0011" are assigned thereto, against this, when the most significant bits are "0000001", "00000001" and "00000000", subsequent 8 bits are assigned to lower significant bits and identification data "0010", "0001" and "0000" are assigned thereto.

Against this, when the most significant bits are "11111111", "11111110" and "1111110", subsequent 8 bits are assigned to lower significant bits and identification data "1111", "1110" and "1101" are assigned thereto.

Further, when the most significant bits are "1111101", "11110" and "1110", subsequent 8 bits are assigned to lower significant bits and identification data "1100", "1011" and "1010" are assigned thereto, and when the most significant bits are "110" and "10",subsequent 8 bits are assigned to lower significant bits and identification data "1001" and "1000" are assigned thereto.

From the compression data it is possible to identify the input data DA1 - DA16 and the channel from which it is converted and generated on the basis of the identification data, by adding the additive data (DU1 - DU16) and (DL1 - DL16) to data (DA1 - DA16) with 8 bits in one word inputted into input/output interface 2 and then converting them into data (DRA1 - DRA16) with 16 bits in one word corresponding to the signal levels of the input data (DA1 - DA16).

In the standard of the 32 [kHz] - 4 channels mode (the LP mode) of the digital audio tape recorder, the compression data is standardized such that it is recorded and reproduced integrally with the identification data and the recording data DA - DD of 4 series can be recorded and reproduced distinctively.

Therefore, in the data recorder 1, it is possible to identify, record and reproduce the input data (DA1 -DA16) of 16 channels inputted to the respective four input/output circuits 2, so that it is possible to record and reproduce easily input data with 8 bits in one word from 64 (= 16 x 4) channels by using the normal recording and reproducing system of the digital audio tape recorder.

According to the present invention, by identifying the input data DA1 - DA16 by effectively using the identification data attached in the non-linear quantization proviso, and by using the digital audio tape recorder (DAT) in existing form the construction can be simplified correspondingly as a whole and it is possible to construct a compact and light weight data recorder 1.

Next it is described how to reproduce the multichannel data recorded in the LP mode by means of the digital audio tape recorder (DAT) mentioned above.

In reproduction mode, the digital signal input/output circuit 24 sequentially reads reproduction data which is picked up from the tape and stored in the memory circuit 22 and then outputs a reproduction data DADT reverse-interleaved according to the standard of the 32 [kHz] - 4 channels mode (the LP mode).

Further, at this time, the digital signal input/output circuit 24 performs a bit allocation so that the reproduction data with 12 bits in one word becomes a reproduction data with 16 bits in one word on the basis of the identification data of the most significant 4 bits of the reproduction data, and outputs the reproduction data of 16 bits sequentially as the reproduction data DADT.

An error check and correction circuit (ECC) 26 produces, in the recording mode, a parity sign for error check and correction to add to the data ADDT stored in the memory circuit 22 and it is temporarily stored in the memory circuit 22.

The error check and correction circuit 26 executes, in the reproducing mode, an error check and correction process of the reproduction data on the basis of the error check and correction sign reproduced.

A recording signal generation circuit (MOD) 28 reads, in the recording mode, the transmission data ADDT stored in the memory circuit 22 together with the parity sign, etc., and modulates it according to the 8-10 modulation.

Further, at this time, a recording signal SR is generated by a simultaneous 8-10 modulation of a predetermined sub code data. The recording signal is outputted through an amplifier circuit (AMP) 30 shown in Fig. 3 to magnetic heads 32A and 32B.

The magnetic heads 32A and 32B are arranged on a rotary drum 34 with an interval of 180°. The rotary drum 34 with a magnetic tape 36 being wound thereon by an angle of 90° rotates at a predetermined speed.

By this, the data recorder 1 forms sequentially recording tracks according to the 32 [kHz] - 4 channels mode standard to be able to record sequentially the input data (DA1 - DA16) of 64 channels on the recording tracks.

Against this, in reproduction, the recording signal generation circuit 28 stops its operation and instead thereof a PLL (phase locked loop) circuit 36 and a demodulation circuit (DET) 40 commence operations.

That is, the PLL circuit 36 derives a reproduction clock from the reprodution signal SP extracted through the amplifier circuit 30 in the reproduction.

The demodulation circuit 40 demodulates the reproduction signal SP on the basis of the reproduction clock and stores a resultant reproduction data in the memory circuit 22.

After the error check and correction, the reproduction data stored in the memory circuit 22 is performed in the error check and correction circuit 26, reverse-interleaved in the digital signal input/output circuit 26 and outputted as the sequential reproduction data DADT.

The 4 channel multiplexer circuit 10 shown in Fig. 3 in the reproduction separates the reproduction data DADT to the reproduction data DA - DD of the respective data channels and outputs them.

The respective input/output circuits 2 supply the reproduction data DA - DD to a data identification circuit 44.

The data identification circuit 44 sequentially separates the reproduction data DA - DD to reproduction data (DPA1 - DPA16) of 16 channels on the basis of the identification data.

Latch circuits 46A1 - 46A16 latch the separated reproduction data (DPA1 - DPA16) and then derive the channel data with 8 bits in one word assigned to the reproduction data (DPA1 - DPA16) according to the conversion procedure shown in Fig. 4.

Thus, by similarly processing, the reproduction data (DA-DD) in the 4 data channels input/output circuits 2, it is possible to reproduce the data with 8 bits in one word of 64 channels.

Although, in the above mentioned embodiment, the present invention was described as applied to the 64 (= 16 x 4) channel data recorder, the present invention is not limited thereto and is applicable widely to a data recorder having any number of channels, on demand.

According to the present invention, in the case of a recorder able to record sequentially data with N bits in one word, when the word length (M) of the recording data to be required is smaller than N (i.e. M<N), all or a portion of data with (N - M) bits is assigned as data channel identification bits L for defining a data channel and records on a recording medium together with the M bits of data. According to the present invention, it is possible to perform a multi-channel data recording by adding data channel identification bits to data to be recorded and then recording it on a recording medium so that numbers of data channels are increased up to 2^{(N-M)} so as to satisfy a condition M+L≦N. In reproducing, the M data bits and the L data bits are extracted from N data bits reproduced from the recording medium to be able to identify the data channel of the M bits data. In the embodiment, a digital audio tape recorder is explained above, but the present invention is not limited thereto. The present invention is applicable to record optically a digital signal on a recording medium. Further, the embodiment described above is explained as a data recorder including a function for identifying data channel for each multi-channel data, but it is possible to realize so called adapter type data processing apparatus to apply data consisting of input signal added data for identification of data channel to existing data recorder.

## Claims

1. A multi-channel data processing apparatus for use with a digital audio tape recorder (1) of the type in which the word length of inputted audio signals is reduced using a predetermined compression standard, characterised in that the apparatus (2) comprises processing means (4A1-16, 44) for adding channel identification data to channel data from a plurality of data channels (DA1-16), the word length of said channel data being not larger than said reduced word length, output means (6) for supplying the resultant data to said recorder (1) in place of said audio signals, and in that the processing means (4A1-16, 44) adds the channel identification data to the channel data to produce data in the input form of the compression standard and such that after compression according to the compression standard the compressed data which is to be recorded comprises the channel data and a channel identifier.

2. Multi-channel data processing apparatus according to claim 1, wherein the data compression standard is a non-linear quantisation to produce from an n bit data word a data word consisting of ℓ range bits corresponding to coarse amplitude levels and m level bits corresponding to fine amplitude levels where n > m + ℓ, and the apparatus generates and adds identification bits to m bit data words from the channels (DA1-16) to form n bit words for supply to the recorder (1), such that in the compressed signal the m bit data word occupies the m level bits and the ℓ range bits are occupied by the channel identifier.

3. Multi-channel data processing apparatus according to claim 1 or 2, wherein the apparatus adds redundancy bits to said data words and identification bits to provide data in the input form.

4. Multi-channel data processing apparatus according to claim 1, 2 or 3, in which:
said reduced word length of said audio signal is 12 bits (= m + ℓ); and
said identifier is 4 bit data (= ℓ) occupying the range bits of said 12 bit reduced word.

5. The multi-channel data recorder according to claim 4, in which:
said data words from the channels have 8 bits per word.

6. A multi-channel data processing apparatus according to any one of claims 1 to 5, wherein said output means (6) is adapted to output resultant data from each channel (DA1-16) sequentially to said recorder (1).

7. A multi-channel data processing apparatus according to any one of the preceding claims, in which the resultant data is in 16 bit words.

## Patentansprüche

1. Mehrkanal-Datenverarbeitungsgerät zur Verwendung bei einem Digital-Audiobandrekorder (1), bei dem die Wortlänge der zugeführten Audiosignale reduziert ist, wobei eine vorgegebene Kompressionsnorm verwendet wird,
dadurch gekennzeichnet, daß das Gerät (2) aufweist:
eine Verarbeitungseinrichtung (4A1-16, 44) zur Hinzufügung von Kanalidentifikationsdaten zu Kanaldaten aus mehreren Datenkanälen (DA1-DA16), wobei die Wortlänge der Kanaldaten nicht größer ist als die der reduzierten Wortlänge,
eine Ausgabeeinrichtung (6) zum Liefern der resultierenden Daten zum Rekorder (1) anstelle der Audiosignale,
und daß die Verarbeitungseinrichtung (4A1-16, 44) zu den Kanaldaten die Kanalidentifikationsdaten hinzufügt, um Daten in der Zuführungsform der Kompressionsnorm zu erzeugen, und daß nach der Kompression gemäß der Kompressionsnorm die komprimierten Daten, die aufgezeichnet werden sollen, die Kanaldaten und eine Kanalkennzeichnung umfassen.

2. Mehrkanal-Datenverarbeitungsgerät nach Anspruch 1, wobei die Datenkompressionsnorm eine nichtlineare Quantisierung ist, um aus einem n-Bit-Datenwort ein Datenwort zu erzeugen, welches aus *l* Bereich-Bits entsprechend den groben Amplitudenpegeln besteht, und aus m Pegel-Bits entsprechend den feinen Amplitudenpegeln, wobei n > m + *l* ist, und das Gerät Identifikations-Bits erzeugt und diese zu den m Bit-Datenwörter aus den Kanälen (DA1-16) hinzufügt, um n Bit-Wörter zur Lieferung zum Rekorder (1) zu bilden, so daß im komprimierten Signal das m Bit-Datenwort die m Pegel-Bits besetzt und die *l* Bereich-Bits durch das Kanalkennzeichen besetzt sind.

3. Mehrkanal-Datenverarbeitungsgerät nach Anspruch 1 oder 2, wobei das Gerät Redundanz-Bits zu den Datenwörtern und Identifikations-Bits hinzufügt, um Daten in der Zuführungsform bereitzustellen.

4. Mehrkanal-Datenverarbeitungsgerät nach Anspruch 1, 2 oder 3, bei dem:
die reduzierte Wortlänge des Audiosignals gleich 12 Bits (= m + *l*) beträgt; und
das Kennzeichen 4 Bit-Daten (= *l*) sind, die die Bereichs-Bits des reduzierten 12-Bit-Wortes besetzen.

5. Mehrkanal-Datenrekorder nach Anspruch 4, bei dem die Datenwörter aus den Kanälen 8 Bits pro Wort haben.

6. Mehrkanal-Datenverarbeitungsgerät nach einem der Ansprüche 1 bis 5, wobei die Ausgabeeinrichtung (6) eingerichtet ist, die resultierenden Daten von jedem Kanal (DA1-16) der Reihe nach an den Rekorder (1) auszugeben.

7. Mehrkanal-Datenverarbeitungsgerät nach einem der vorhergehenden Ansprüche, bei dem die resultierenden Daten 16 Bit-Wörter sind.

## Revendications

1. Appareil de traitement de données à canaux multiples pour emploi avec un enregistreur (1) sur bande audio numérique du type dans lequel la longueur des mots des signaux audio entrés est réduite à l'aide d'un standard de compression prédéterminé, caractérisé par le fait que l'appareil (2) comporte des moyens de traitement (4A1-16, 44) pour ajouter des données d'identification de canal aux données en provenance d'une pluralité de canaux de données (DA 1-16), la longueur des mots desdites données en provenance des canaux de données n'étant pas supérieure à ladite longueur de mot réduite, des moyens d'émission pour envoyer les données résultantes audit enregistreur (1) à la place desdits signaux audio, et par le fait que des moyens de traitement (4A1-16, 44) ajoutent les données d'identification de canal aux données provenant des canaux pour produire des données sous la forme d'entrée du standard de compression et de façon qu'après compression conforme au standard de compression, les données comprimées qui sont à enregistrer comportent les données provenant des canaux et un identificateur de canal.

2. Appareil de traitement de données à canaux multiples, selon la revendication 1, dans lequel le standard de compression des données est une quantification non linéaire pour produire, à partir d'un mot de données de n bits un mot de données constitué de ℓ bits de gamme correspondant à des valeurs grossières de l'amplitude avec n > m + ℓ, et l'appareil génère et ajoute des bits d'identification aux mots de données de n bits provenant des canaux (DA 1-16) pour former des mots de n bits pour envoyer à l'enregistreur (1) de façon que dans le signal comprimé le mot de données de n bits occupe les m bits d'amplitude et que les ℓ bits de gamme soient occupés par l'identificateur de canal.

3. Appareil de traitement de données à canaux multiples selon la revendication 1 ou 2, dans lequel l'appareil ajoute des bits de redondance auxdits mots de données et aux bits d'identification pour fournir les données sous la forme d'entrée.

4. Appareil de traitement de données à canaux multiples selon la revendication 1, 2 ou 3, dans lequel:
ladite longueur de mots réduite dudit signal audio est 12 bits ( = m + ℓ); et
ledit identificateur est une donnée de 4 bits ( = ℓ) occupant les bits de gamme dudit mot réduit de 12 bits.

5. Enregistreur de données à canaux multiples selon la revendication 4, dans lequel;
lesdits mots de données provenant des canaux comprennent 8 bits par mot.

6. Appareil de traitement de données à canaux multiples selon l'une quelconque des revendications 1 à 5, dans lequel lesdits moyens d'émission (6) sont conçus pour envoyer séquentiellement audit enregistreur (1) les données résultantes provenant de chaque canal (DA1-16).

7. Appareil de traitement de données à canaux multiples selon l'une quelconque des revendications précédentes, dans lequel les données résultantes sont sous forme de mots de 16 bits.
